# EUROPEAN PATENT SPECIFICATION

(11) **EP 3 961 271 B1**
(45) Date of publication and mention of the grant of the patent: **19.07.2023**
(21) Application number: 21203539.8
(22) Date of filing: 29.01.2016
(51) Int. Cl.: G01V 3/10, H01Q 7/08, H01Q 3/24

(54) **ANTENNA FOR UNDERGROUND LINE LOCATION**
ANTENNE ZUR ORTUNG UNTERIRDISCHER LEITUNGEN
ANTENNE POUR LOCALISATION DE LIGNE SOUTERRAINE

(30) Priority: 30.01.2015 US 201562110384 P
(43) Date of publication of application: 02.03.2022
(62) Divisional of application: 16744232.6
(73) Proprietor: Metrotech Corporation, Santa Clara, CA 95054 (US)
(72) Inventor: POLAK, Stevan, Los Gatos, 95030 (US)
(74) Representative: Gill, David Alan

(56) References cited:
- DE-C- 428 628
- US-A1- 2005 253 711
- US-A1- 2008 024 377

## Description

### BACKGROUND

### Technical Field

The present disclosure relates to detection of underground lines and, in particular, to an antenna configuration for use in underground line location.

### Discussion Of Related Art

Underground pipe and cable locators (often termed line locators) have existed for many years and are described in many issued patents and other publications. Line locator systems typically include a mobile receiver and a transmitter. The transmitter is coupled to a target conductor, either by direct electrical connection or through induction, to provide a current signal on the target conductor. The receiver detects and processes signals resulting from the electromagnetic field generated at the target conductor as a result of the current signal, which can be a continuous wave sinusoidal signal provided to the target conductor by the transmitter.

The transmitter is often physically separate from the receiver, with a typical separation distance of several meters or in some cases up to many kilometers. The transmitter couples the current signal, whose frequency can vary from few Hz to several kHz and be user chosen from a selectable set of frequencies, to the target conductor. The frequency of the current signal applied to the target conductor can be referred to as the active locate frequency. The target conductor then generates an electromagnetic field at the active locate frequency in response to the current signal.

Location results can be improved, for example, by using multiple different frequencies. Therefore, there is a need for antennas that optimize sensitivity.

DE 428628 discloses a loop antenna divided into switchable turns or winding groups and in which various arrangements of windings are illustrated.

US 2008/0024377 A1 discloses an antenna arrangement for receiving and sending signals in a first frequency range and in a second frequency range, the antenna arrangement including at least two antenna elements configured to receive and send signals in the first frequency range and a connecting arrangement to which al least two of the antenna elements can be electrically connected in series.

US 20050253711 A1 discloses a multi-mode electromagnetic target discrimination sensor system for transmitting an electromagnetic signal and receiving a reflected signal from at least one target is disclosed having a variable inductance antenna having a variable inductance transmitter and a variable inductance receiver for varying at least one of operating bandwidth, sensitivity and size of the antenna, a processor for 1 alternating between a time domain operating mode and a frequency domain operating mode, and controlling the variation of the inductance of the variable inductance antenna based on a current operating mode, and at least one processing algorithm for receiving signals from the receiver, discriminating targets from the received signals, and outputting the discrimination results is disclosed.

US 2014/0139223 describes a system for the location of buried objects that includes an omnidirectional antenna.

### SUMMARY

In accordance with the invention, there is provided an antenna as in Claim 1 and a method as in Claim 2.

These and other embodiments will be described in further detail below with respect to the following figures.

### BRIEF DESCRIPTION OF THE DRAWINGS

FIG. 1 illustrates operation of a line locator system according to some embodiments of the present invention.
FIG. 2 illustrates at a high level block diagram of a receiver in a line locator system.
FIG. 3 illustrates an antenna according to some embodiments.
FIG. 4 further illustrates an antenna configuration according to some embodiments.
FIGS. 5A and 5B illustrates embodiments of an antenna.

The drawings may be better understood by reading the following detailed description.

### DETAILED DESCRIPTION

In the following description, specific details are set forth describing some embodiments of the present invention. It will be apparent, however, to one skilled in the art that some embodiments may be practiced without some or all of these specific details. The specific embodiments disclosed herein are meant to be illustrative but not limiting. One skilled in the art may realize other elements that, although not specifically described here, are within the scope of this disclosure.

This description and the accompanying drawings that illustrate inventive aspects and embodiments should not be taken as limiting--the claims define the protected invention. In some instances, well-known structures and techniques have not been shown or described in detail in order not to obscure the invention.

Additionally, the drawings are not to scale. Relative sizes of components are for illustrative purposes only and do not reflect the actual sizes that may occur in any actual embodiment of the invention. Like numbers in two or more figures represent the same or similar elements. Elements and their associated aspects that are described in detail with reference to one embodiment may, whenever practical, be included in other embodiments in which they are not specifically shown or described. For example, if an element is described in detail with reference to one embodiment and is not described with reference to a second embodiment, the element may nevertheless be claimed as included in the second embodiment.

Further, embodiments of the invention are illustrated with reference to electrical schematics. One skilled in the art will recognize that these electrical schematics represent implementation by physical electrical circuits, implementation by processors executing algorithms stored in memory, or implementation by a combination of electrical circuits and processors executing algorithms.

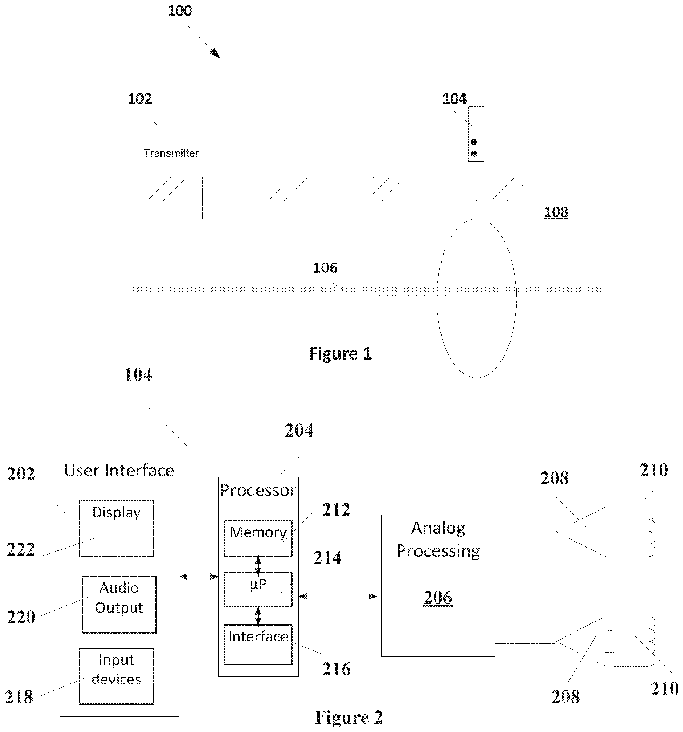

Figure 1 illustrates a line location system 100 according to some embodiments of the present invention. As shown in Figure 1, line location system 100 includes a transmitter 102 and a receiver 104. Transmitter 102 is electrically coupled to a conductor 106 that is buried in the ground 108. Conductor 106 may, for example, be a conducting pipe or a wire and is generally considered to be a long conducting structure. Transmitter 102 provides an electrical signal along conductor 106, which then transmits an electromagnetic signal along its length. The electromagnetic signal is received by one or more antennae on receiver 104. Receiver 104 is passed over the surface of the ground 108 in order to locate the position of conductor 106 beneath the ground. From the signal strength, the depth and position of conductor 106 can be determined.

Figure 2 illustrates a block diagram of an example receiver 104. Receiver 104 includes one or more antennas 210. There may be any number of antennas 210, arranged in any fashion. In some embodiments, antennas 210 may be arranged in orthogonal fashion to measure the 3D components of the magnetic field generated from conductor 106. For example, three of antennas 210 may positioned orthogonally to one another. Other configurations of multiple antennas 210 can be used. For example, vertically arranged antennas can be used to find the horizontal component of the magnetic field (which will occur as a null in the vertical antenna) or horizontally oriented antennas placed apart vertically can be used to estimate a depth of the conductor 106.

As is further shown in Figure 2, signals from antenna 210 are received in a low noise amplifier 208 and processed by analog processing 206. Analog processing 206 can include filters or other electronics for processing the signals from antennas 210 and further includes an analog-to-digital converters for providing digital signal outputs to processor 204. Processor 204 further processes the data from antennas 210 to provide information to a user through user interface 202. Further, user interface 202 may include user inputs for adjusting parameters in either analog processing or procedures running in processor 204 that affect the processing of the received data.

As is further shown in Figure 2, processor 204 can be dedicated circuitry devoted to analyzing and displaying data received from analog processing 206. In some embodiments, processor 204 can include a microprocessor 214 coupled to a memory 212 and an interface 216. Memory 212 can be any combination of volatile or non-volatile memory systems that hold data and programming instructions for microprocessor 214. Interface 216 can be any interface that allows processor 204 to communicate with devices such as analog processing 206 and user interface 202, along with other data input and output devices that may be coupled to processor 204.

User interface 202 can be any display or input device to provide data and receive data from a user. As shown in Figure 2, user interface 202 can include a display 222, audio output 220, and input devices 218. Input devices 218 can include keyboards, pointing devices, touch screens, or other devices to allow a user to input data to processor 204.

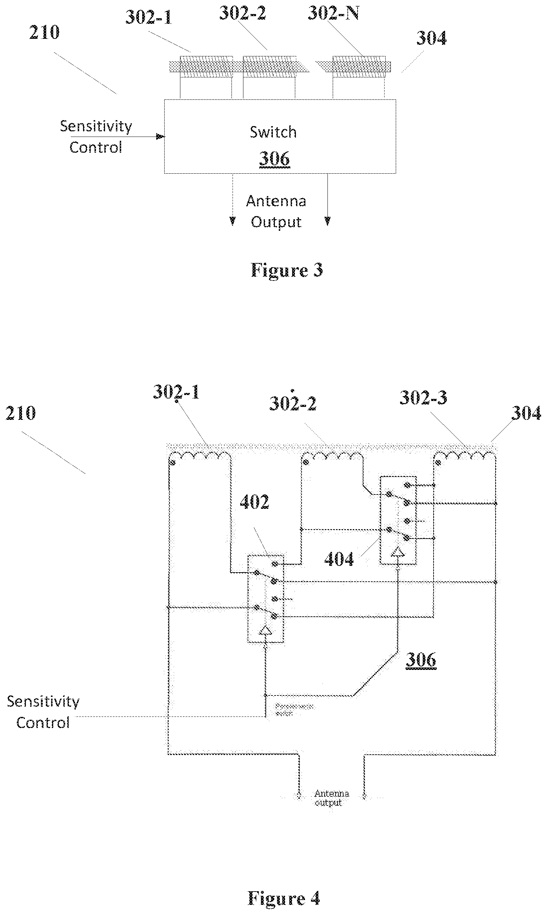

Figure 3 illustrates an embodiment of antenna 210. As shown in Figure 3, antenna 210 includes one or more coil arrays 302-1 through 302-N positioned along a core 304. Core 304 can be, for example, a magnetic core or core 304 may represent an air core. Each of the coil arrays 302-1 through 302-N can be formed with any number of turns. In some examples, for example, coil arrays 302-1 through 302-N can have 300 turns.

In some conventional systems, an antenna may be formed of a large number of turns wrapped around a core. Taps may be formed along the turns so that a system may pick the number of individual turns that will be used in the antenna. Sensitivity of the antenna can be adjusted by using more or fewer turns of the large number of turns. However, these arrangements result in a portion of the large number of turns not being connected (i.e., the end number of turns are left unconnected). Such a system can actually reduce the sensitivity of the coils due to interference from the unconnected turns.

In the embodiment shown in Figure 3, however, leads from each of the coil arrays 302-1 through 302-N are input to switch 306. There antenna configuration will not result in unconnected numbers of turns in the coil arrays. Switch 306 connects the leads from each of coil arrays 302-1 through 302-N in response to the sensitivity control signal input. The sensitivity control signal can be derived from an input in user interface 202, can be automatically indicated by processor 204, or can be set by a separate mechanical input, for example. Sensitivity control signal can be a single electrical signal or a number of individual signals received by switch 306 to indicate a switching arrangement. Antenna arrays 302-1 through 302-N can be connected in any way, for example in series or in parallel, that results in all coils in all of antenna arrays 302-1 through 302-N be included in the circuit. Switch 306 then provides the combined antenna output that results from the connection of antenna arrays 302-1 through 302-N.

As an example, if N is three and each of the antenna arrays 302-1 through 302-N includes 300 turns, then when switch 306 connects the antenna arrays 302-1 through 302-N in series an antenna with 900 turns results. When connected in parallel, an antenna with 300 turns results. If two are connected in parallel and the pair connected in series with the third, an antenna array with 600 turns results. The sensitivity of the antenna with frequency depends on the number of turns in the antenna.

Figure 4 illustrates an example of switch 306 that can connect three antennas 302-1 through 302-3 in series or in parallel in response to a sensitivity control signal that is either 0 or 1. As illustrated in Figure 4, switches 402 and 404 control whether coils 302-1, 302-2 and 302-3 are connected in parallel or in series. As shown in Figure 4, switches 402 and 404 are double pole double throw (DPDT) switches. In the illustrated position of switches 402 and 404, coils 302-1 through 302-3 are coupled in parallel. In the opposite orientation as the one shown, coils 302-1 through 302-3 are coupled in series. Switches 402 and 404 are controlled by the sensitivity control signal which is input to switch 306.

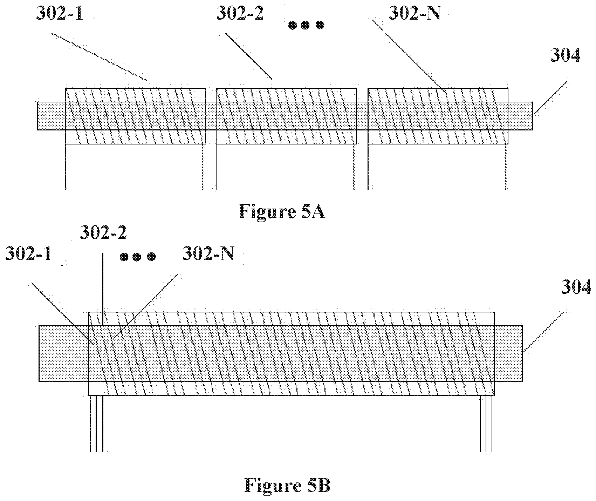

Figures 5A and 5B illustrates alternative arrangements for coil arrays 302-1 through 302-N. In some embodiments, a coil arrangement that combines aspects of the embodiments illustrated in Figures 5A and 5B may be used. As shown in Figure Figure 3, the arrangement of coils formed by coil arrays 302-1 through 302-N is switched in switch 306 to provide an optimum sensitivity to a particular frequency signal. Consequently, multiple frequencies can be sensed during a locating session by switching coils 302-1 through 302-N in combinations of series and parallel connections to form an overall antenna that is particularly sensitive to the current active frequency.

As shown in Figure 5A, coils 302-1 through 302-N are separated and arranged along core 304. As shown in Figure 5B, coils 302-1 through 30-2-N are overlapping such that individual turns from each of coil arrays 302-1 through 302-N are adjacent to each other. Another embodiment may be formed where groups of coils arranged as illustrated in Figure 5B can be separated along core 304 as illustrated in Figure 5A. For example, a first coil group such as coils 302-1 through 302-n may be overlapping as illustrated in Figure 5B, a second coil group such as coils 302-(n+1) through 302-j may be overlapping as illustrated in Figure 5B, and the first coil group and second coil group may be separated as illustrated in Figure 5A.

In the preceding specification, various embodiments have been described with reference to the accompanying drawings. It will, however, be evident that various modifications and changes may be made thereto, and additional embodiments may be implemented, without departing from the broader scope of the invention as set for in the claims that follow. The specification and drawings are accordingly to be regarded in an illustrative rather than restrictive sense.

## Claims

1. A receive antenna (210) for a line location system (104), comprising:
a plurality of coil arrays (302) arranged along a core (304) configured to receive signals from an underground line; and
a plurality of switches (306) coupled to the plurality of coil arrays, each of the switches couples across terminals of one of the coil arrays in the plurality of coil arrays, the plurality of switches forming multiple switch combinations (402, 404), each switch combination configured to provide connections between each of the plurality of coil arrays to form the receive antenna,
wherein each of the multiple switch combinations results in the receive antenna including all of the plurality of coil arrays,
wherein the plurality of switches are configured to receive sensitivity control signals that determine which of the multiple switch combinations to set to form the receive antenna,
wherein the sensitivity control signals relate to a receive frequency of the receive antenna,
wherein the sensitivity control signals include a first sensitivity control signal and a second sensitivity control signal, the first sensitivity control signal to indicate a first switch combination where the plurality of coil arrays are in series, and the second sensitivity control signal to indicate a second switch combination where the plurality of coil arrays are in parallel, and
wherein at least a portion of the plurality of coil arrays are overlapping such that individual turns from each of the plurality of coils are adjacent to each other.

2. A method of receiving a signal from an underground line (106) with a receive antenna (210), comprising:
selecting a selected configuration of a plurality of coil arrays (302) arranged along a core (304) from a plurality of configurations based on sensitivity control signals that depend on a desired working frequency of the antenna, wherein all coils in the plurality of coil arrays are included in each configuration of the plurality of configurations;
coupling the plurality of coil arrays according to the selected configuration using a plurality of switches (306) to form the receive antenna, each of the switches coupled across one of the coils in the plurality of coils, the selected configuration based on the sensitivity control signals according to the desired working frequency,
wherein the sensitivity control signals include a first sensitivity control signal and a second sensitivity control signal,
wherein coupling the plurality of coil arrays includes each of the plurality of switches receiving the first sensitivity control signal provides a first switch combination where the plurality of coil arrays are in series, and each of the plurality of switches receiving the second sensitivity control signal provides for a second switch combination where the plurality of coil arrays are in parallel, and
wherein at least a portion of the plurality of coil arrays are overlapping such that individual turns from each of the plurality of coils are adjacent to each other.

3. The method of claim 2, wherein the coupling a plurality of coil arrays includes coupling the coil arrays in a combination of series and parallel configurations.

4. The method of claim 2, wherein the plurality of coil arrays include a first and second group of overlapping coil arrays, the first and second group being arranged in a separated fashion along the core.

## Patentansprüche

1. Empfangsantenne (210) für ein Leitungsortungssystem (104), umfassend:
eine Mehrzahl von Spulenarrays (302), die entlang eines Kerns (304) angeordnet und zum Empfang von Signalen von einer unterirdischen Leitung konfiguriert sind; und
eine Mehrzahl von Schaltern (306) gekoppelt an die Mehrzahl von Spulenarrays, wobei jeder der Schalter über Anschlüsse eines der Spulenarrays in der Mehrzahl von Spulenarrays koppelt, wobei die Mehrzahl von Schaltern mehrere Schalterkombinationen (402, 404) bildet, wobei jede Schalterkombination konfiguriert ist, Verbindungen zwischen jedem der Mehrzahl von Spulenarrays bereitzustellen, um die Empfangsantenne zu bilden,
wobei jede der mehreren Schalterkombinationen dazu führt, dass die Empfangsantenne die gesamte Mehrzahl von Spulenarrays einschließt,
wobei die Mehrzahl von Schaltern konfiguriert ist, Empfindlichkeitssteuerungssignale zu empfangen, die bestimmen, welche der mehreren Schalterkombinationen eingestellt werden sollen, um die Empfangsantenne zu bilden,
wobei die Empfindlichkeitssteuerungssignale sich auf eine Empfangsfrequenz der Empfangsantenne beziehen,
wobei die Empfindlichkeitssteuerungssignale ein erstes Empfindlichkeitssteuerungssignal und ein zweites Empfindlichkeitssteuerungssignal einschließen, wobei das erste Empfindlichkeitssteuerungssignal eine erste Schalterkombination anzeigt, in der die Mehrzahl von Spulenarrays in Serie geschaltet sind, und wobei das zweite Empfindlichkeitssteuerungssignal eine zweite Schalterkombination anzeigt, in der die Mehrzahl von Spulenarrays parallel geschaltet sind, und
wobei zumindest ein Teil der Mehrzahl von Spulenarrays derart überlappen, dass individuelle Wicklungen von jeder der Mehrzahl von Spulen benachbart zueinander liegen.

2. Verfahren zum Empfangen eines Signals von einer unterirdischen Leitung (106) mit einer Empfangsantenne (210), umfassend:
Auswählen einer ausgewählten Konfiguration einer Mehrzahl von Spulenarrays (302), die entlang eines Kerns (304) angeordnet sind, aus einer Mehrzahl von Konfigurationen auf der Basis von Empfindlichkeitssteuerungssignalen, die von einer gewünschten Arbeitsfrequenz der Antenne abhängen, wobei alle Spulen in der Mehrzahl von Spulenarrays in jeder Konfiguration der Mehrzahl von Konfigurationen eingeschlossen sind;
Koppeln der Mehrzahl von Spulenarrays gemäß der ausgewählten Konfiguration unter Verwendung einer Mehrzahl von Schaltern (306) zum Bilden der Empfangsantenne, wobei jeder der Schalter über eine der Spulen in der Mehrzahl von Spulen gekoppelt ist, wobei die ausgewählte Konfiguration auf den Empfindlichkeitssteuerungssignalen gemäß der gewünschten Arbeitsfrequenz basiert,
wobei die Empfindlichkeitssteuerungssignale ein erstes Empfindlichkeitssteuerungssignal und ein zweites Empfindlichkeitssteuerungssignal einschließen,
wobei das Koppeln der Mehrzahl von Spulenarrays einschließt, dass jeder der Mehrzahl von Schaltern auf den Empfang des ersten Empfindlichkeitssteuerungssignals hin eine erste Schalterkombination bereitstellt, in der die Mehrzahl von Spulenarrays in Serie geschaltet sind, und jeder der Mehrzahl von Schaltern auf den Empfang des zweiten Empfindlichkeitssteuerungssignals hin eine zweite Schalterkombination bereitstellt, in der die Mehrzahl von Spulenarrays parallel geschaltet sind, und
wobei zumindest ein Teil der Mehrzahl von Spulenarrays derart überlappen, dass individuelle Wicklungen von jeder der Mehrzahl von Spulen benachbart zueinander liegen.

3. Verfahren nach Anspruch 2, wobei das Koppeln einer Mehrzahl von Spulenarrays Koppeln der Spulenarrays in einer Kombination von Serien- und Parallelkonfigurationen einschließt.

4. Verfahren nach Anspruch 2, wobei die Mehrzahl von Spulenarrays eine erste und eine zweite Gruppe von überlappenden Spulenarrays einschließt, wobei die erste und die zweite Gruppe in einer getrennten Art und Weise entlang des Kerns angeordnet sind.

## Revendications

1. Antenne de réception (210) pour un système de localisation de ligne (104), comprenant :
une pluralité de réseaux de bobines (302) agencés le long d'un noyau (304) configuré pour recevoir des signaux en provenance d'une ligne souterraine ; et
une pluralité d'interrupteurs (306) couplés à la pluralité de réseaux de bobines, chacun des interrupteurs se couplant aux bornes d'un des réseaux de bobines de la pluralité de réseaux de bobines, la pluralité d'interrupteurs formant de multiples combinaisons d'interrupteurs (402, 404), chaque combinaison d'interrupteurs étant configurée pour fournir des connexions entre chaque réseau de bobines de la pluralité de réseaux de bobines pour former l'antenne de réception,
chacune des multiples combinaisons d'interrupteurs ayant pour résultat que l'antenne de réception inclut la totalité de la pluralité de réseaux de bobines,
la pluralité d'interrupteurs étant configurés pour recevoir des signaux de commande de sensibilité qui déterminent quelles combinaisons des multiples combinaisons d'interrupteurs doivent être établies pour former l'antenne de réception,
les signaux de commande de sensibilité se rapportant à une fréquence de réception de l'antenne de réception,
les signaux de commande de sensibilité incluant un premier signal de commande de sensibilité et un second signal de commande de sensibilité, le premier signal de commande de sensibilité indiquant une première combinaison d'interrupteurs dans laquelle la pluralité de réseaux de bobines sont en série, et le second signal de commande de sensibilité indiquant une seconde combinaison d'interrupteurs dans laquelle la pluralité de réseaux de bobines sont en parallèle, et
au moins une partie de la pluralité de réseaux de bobines se chevauchant de sorte que des spires individuelles de chaque bobine de la pluralité de bobines sont adjacentes les unes aux autres.

2. Procédé de réception d'un signal en provenance d'une ligne souterraine (106) avec une antenne de réception (210), comprenant les étapes consistant à :
sélectionner une configuration sélectionnée d'une pluralité de réseaux de bobines (302) agencés le long d'un noyau (304) parmi une pluralité de configurations, sur la base de signaux de commande de sensibilité qui dépendent d'une fréquence de travail souhaitée de l'antenne, toutes les bobines de la pluralité de réseaux de bobines étant incluses dans chaque configuration de la pluralité de configurations ;
coupler la pluralité de réseaux de bobines selon la configuration sélectionnée au moyen d'une pluralité d'interrupteurs (306) pour former l'antenne de réception, chacun des interrupteurs étant couplé aux bornes d'une des bobines de la pluralité de bobines, la configuration sélectionnée étant basée sur les signaux de commande de sensibilité selon la fréquence de travail souhaitée,
les signaux de commande de sensibilité incluant un premier signal de commande de sensibilité et un second signal de commande de sensibilité,
le couplage de la pluralité de réseaux de bobines incluant le fait que chaque interrupteur de la pluralité d'interrupteurs qui reçoit le premier signal de commande de sensibilité produit une première combinaison d'interrupteurs dans laquelle la pluralité de réseaux de bobines sont en série, et que chaque interrupteur de la pluralité d'interrupteurs qui reçoit le second signal de commande de sensibilité produit une seconde combinaison d'interrupteurs dans laquelle la pluralité de réseaux de bobines sont en parallèle, et
au moins une partie de la pluralité de réseaux de bobines se chevauchant de sorte que des spires individuelles de chaque bobine de la pluralité de bobines sont adjacentes les unes aux autres.

3. Procédé selon la revendication 2, dans lequel le couplage d'une pluralité de réseaux de bobines inclut le couplage des réseaux de bobines dans une combinaison de configurations en série et en parallèle.

4. Procédé selon la revendication 2, dans lequel la pluralité de réseaux de bobines incluent un premier et un second groupe de réseaux de bobines qui se chevauchent, le premier et le second groupe étant agencés séparément le long du noyau.
